# EUROPÄISCHE PATENTSCHRIFT

(11) **EP 3 783 243 B1**
(45) Veröffentlichungstag und Bekanntmachung des Hinweises auf die Patenterteilung: **28.12.2022**
(21) Anmeldenummer: 19193160.9
(22) Anmeldetag: 22.08.2019
(51) Int. Cl.: F16D 65/18, F16D 55/2255, F16D 121/24

(54) **ELEKTROMECHANISCHER BREMSAKTUATOR FÜR EINE SCHEIBENBREMSE**
ELECTROMECHANICAL BRAKE ACTUATOR FOR A DISC BRAKE
ACTIONNEUR ÉLECTROMÉCANIQUE DE FREIN POUR UN FREIN À DISQUE

(43) Veröffentlichungstag der Anmeldung: 24.02.2021
(73) Patentinhaber: ZF CV Systems Global GmbH, 3006 Bern (CH)
(72) Erfinder: BEIER, Peter, 31515 Wunstorf (DE); HENNING, Paul, 68723 Schwetzingen (DE); TOMALA, Barolomiej, 45-267 Opole (PL)
(74) Vertreter: Rabe, Dirk-Heinrich

(56) Entgegenhaltungen:
- EP-A1- 2 174 037
- EP-A1- 2 815 150
- EP-B1- 2 174 037
- EP-B1- 2 815 150

## Beschreibung

Die Erfindung betrifft einen elektromechanischen Bremsaktuator mit einem Gehäuse für Scheibenbremsen von Fahrzeugen, insbesondere für Scheibenbremsen von Nutzfahrzeugen.

Gehäuse dienen allgemein der Aufnahme und dem Schutz von Komponenten. Im Fahrzeugbereich müssen Gehäuse erhöhten Anforderungen, also hohe Steifigkeiten bei einem möglichst geringen Gewicht, genügen. Speziell im Bereich der Radaufhängung sind Gehäuseteile zudem intensiv Umweltbedingungen, wie zum Beispiel Steinschlägen, Staub, Schnee ausgesetzt. Weiterhin ist im Bereich der Radaufhängung für den Einbau von Komponenten generell nur ein geringes Platzangebot vorhanden. Aktuelle Entwicklungen zur Aktuierung von Scheibenbremsen gehen hin zu elektromechanischen Bremsaktuatoren. Elektromechanische Bremsaktuatoren weisen eine Vielzahl an Bauteilen auf, die u.a. gegen die beschriebenen Umwelteinflüsse geschützt werden müssen. Zudem wirken die Bauteile, wie ein Getriebe, eine Kurvenscheibe und ein Motor des elektromechanischen Bremsaktuators zusammen, weshalb die Bauteile fest in dem Gehäuse angeordnet oder gelagert sein müssen. Im Zuge von Leichtbauentwicklungen ist es eine zusätzliche Herausforderung, dass der elektromechanische Bremsaktuator so leicht wie möglich gebaut sein soll.

Die EP 2815 150 B1 und die EP 2174 037 B1 offenbaren eine Scheibenbremse mit einer elektromechanischen Druckeinheit. Die elektromechanische Druckeinheit ist als Linearaktuator ausgebildet. Ein axial in Richtung der Bremsscheibe angeordneter elektrischer Motor ist über ein Übersetzungsgehäuse zur Aufnahme eines Übersetzungsgetriebes mit einem Bremssattel der Scheibenbremse über eine Schraubverbindung verbunden. An dem Übersetzungsgehäuse sind Flansche zur Aufnahme der Schraubenausgebildet. Mittels dem Elektromotor und dem Übersetzungsgetriebe wird eine Stellspindel angetrieben, die die Bremsscheibe über Bremsbeläge zuspannt.

Aufgabe der Erfindung ist es, einen elektromechanischen Bremsaktuator mit einem Gehäuse bereitzustellen, wobei das Gehäuse ein geringes Gewicht sowie eine hohe Steifigkeit aufweist und einfach in der Herstellung ist.

Die Aufgabe wird dadurch gelöst, dass das Gehäuse des elektromechanischen Bremsaktuators ein Aluminium-Druckgussformteil ist. Aluminium weist gegenüber Stahl eine geringere Dichte auf, weshalb das Aluminium-Druckgussformteil leichter als ein Stahl-Gehäuse ist. Eingebaut in einem Fahrzeug, ermöglicht der Gewichtsunterschied des Aluminium-Druckgussformteils gegenüber einem Stahl-Gehäuse zusätzliche Kraftstoffeinsparungen während des Betriebs eines Fahrzeugs. Darüber hinaus ist Aluminium als Werkstoff gut verformbar, weshalb auch die Ausgestaltung detaillierte Ausprägungen, wie Versteifungsrippen oder Bohrlöcher, ohne größere Nachbearbeitung möglich sind. Zusätzlich ermöglicht der Werkstoff Aluminium die Herstellung des Aluminium-Druckgussformteils in einem Stück. Weitere Verbindungselemente, wie Schrauben, werden zur Herstellung des Aluminium-Druckgussformteils nicht benötigt.

In einer bevorzugten Weiterbildung weist das erste Gehäuseteil des Aluminium-Druckgussformteils eine Anlagefläche für eine erste Platte der Zwei-Platten-Druckgießmaschine und das zweite Gehäuseteil des Aluminium-Druckgussformteils eine zweite Anlagefläche für eine zweite Platte einer Zwei-Platten-Druckgießmaschine auf. Der Einsatz einer Zwei-Platten-Druckgießmaschine ist gegenüber einer Vier-Platten-Druckgießmaschine deutlich kostengünstiger und es sind an dem Gehäuse lediglich zwei ebene Flächen notwendig, an denen die Platten der Druckgießmaschine ansetzen und für die Umformung des Grundkörpers in ein Gehäuse den erforderlichen Druck erzeugen. Die erste Anlagefläche für die erste Platte ist die Flanschfläche zur Anbindung an eine Scheibenbremse. Die zweite Anlagefläche für die zweite Platte ist die Flanschfläche einer Montageöffnung zur Anbindung eines Deckels. Alle anderen Flächen des Gehäuses können damit nicht eben geformte Anbindungsflächen aufweisen oder mittels zusätzlicher Versteifungsrippen ausgestaltet werden. Darüber hinaus kann das Aluminium-Druckgussformteil in seiner Abmessung kleiner gebaut werden, da bereits vorhandene ebene Flächen als Anlageflächen für die Platten der Zwei-Platten-Druckgießmaschine verwendet werden und mittels zusätzlichem Material keine ebene Fläche an dem Aluminium-Druckgussformteil aufgebaut werden muss.

Das zweite Gehäuseteil weist in einer weiteren Ausgestaltung, axial bezogen auf eine axiale Achse des zweiten Gehäuseteils, einen Motorflansch zur Anbindung eines Motors auf Der Motorflansch ist kreisförmig ausgebildet und entspricht der Form eines elektrischen Motors. An der Außenwand des zweiten Gehäuseteils sind vier Bohrungen, insbesondere vier Gewindebohrungen, zur Anbindung eines Motors angeordnet. Die Bohrungen ermöglichen eine einfache Montage und Demontage des Motors. Das zweite Gehäuseteil kann aber auch in einer zweiten Ausführung, axial bezogen auf eine axiale Achse des zweiten Gehäuseteils, einen zylindrischen Teilbereich zur Aufnahme des Motors und einen Motorflansch zur Anbindung des Motors an eine Lagerstelle des zweiten Gehäuseteils aufweisen. Die Bohrungen sind in der zweiten Ausgestaltung des zweiten Gehäuseteils zur Aufnahme und Anbindung eines Deckels ausgelegt. Das zweite Gehäuseteil und der Deckel umschließen in der zweiten Ausführung den Motor vollständig.

Zudem weist in einer weiteren Ausführung der Motorflansch, ausgehend von der axialen Achse des zweiten Gehäuseteils, mittig eine Lagerstelle auf. Ausgehend von der Lagerstelle sind radial in Richtung der Außenwand Verstärkungsrippen angeordnet. Besonders bevorzugt sind radial zwischen der Lagerstelle und der Außenwand Verstärkungsrippen angeordnet, wobei die Verstärkungsrippen mit einem gleichen Abstand voneinander angeordnet sind und damit für eine gleichmäßige Steifigkeit zwischen der Lagerstelle und der Außenwand sorgen.

Darüber hinaus weist in einer weiterführenden Ausgestaltung das zweite Gehäuseteil an der Innenseite, axial zwischen dem Motorflansch und dem Getriebe, Lageraufnahmen zur Anordnung von Lagern auf, wobei die Lager dafür eingerichtet sind die Kurvenscheibe aufzunehmen. Konkret sind an der Innenseite des Gehäuses zwei Lageraufnahmen ausgebildet. Eine Lageraufnahme ist getriebeseitig angeordnet, also an der Innenseite des zweiten Gehäuseteils, an dem das Getriebe des elektromechanischen Bremsaktuators angeflanscht ist. Die zweite Lageraufnahme ist motorflanschseitig angeordnet, also an der Innenseite des zweiten Gehäuseteils, an dem der Motor des elektromechanischen Bremsaktuators angeflanscht ist. Die Lageraufnahmen sind bevorzugt für Nadellager ausgebildet.

In einer weiteren vorteilhaften Ausgestaltung weist das zweite Gehäuseteil radial, entgegengesetzt der Richtung des ersten Gehäuseteils, zwischen dem Motorflansch und dem Getriebe, eine Montageöffnung für die Kurvenscheibe auf. Die Montageöffnung ist vorteilhaft kreisförmig ausgebildet und entspricht der Form einer länglichen Nut, die Montageöffnung geht also tangential in eine Gerade über. Es ist auch denkbar, dass die kreisförmige Montageöffnung tangential kreisrund fortgeführt wird, wobei die Montageöffnungsbreite gerade ausreicht, die Kurvenscheibe in schmalster Ausdehnung in die Montageöffnung einzuführen. Die Montageöffnung entspricht weitestgehend der Abmessung der Kurvenscheibe, damit die Kurvenscheibe zur Wartungszwecken in das zweite Gehäuseteil des elektromechanischen Bremsaktuators eingebaut oder ausgebaut werden kann.

Zudem weist die Montageöffnung in einer weiteren Ausführung Ausnehmungen zur Aufnahme eines Bearbeitungswerkzeugs und Bohrungen zur Aufnahme eines Deckels auf. Der Deckel überdeckt die Montageöffnung vollständig und schützt den Elektromechanischen Bremsaktuator vor dem Eindringen ungewollter Umwelteinflüsse wie, Staub oder Geröll. Die Ausnehmungen und die Bohrungen sind radial an einem Außenrand der Montageöffnung eingebracht. Bevorzugt weist die Montageöffnung zwei gegenüberliegend und schräg versetzte Ausnehmungen auf, wobei die Ausnehmungen als Sacklochbohrungen ausgebildet sind. Zudem sind bevorzugt vier Bohrungen zur Aufnahme eines der Montageöffnung übergreifenden Deckels in dem äußeren Rand der Montageöffnung eingebracht. Die Bohrungen sind zur form- und kraftschlüssigen Fixierung des Deckels gleichmäßig versetzt angeordnet.

Erfindungsgemäß ist das dritte Gehäuseteil zylinderförmig ausgebildet und weist axial entlang einer axialen Achse des dritten Gehäuses einen Führungskanal zum Führen eines Stößels oder einer Spindel auf. Die zylinderförmige Ausgestaltung des dritten Gehäuseteils ist der Form des Stößels angepasst. Das heißt, dass das erste Gehäuseteil, das zweite Gehäuseteil und das dritte Gehäuseteil unterschiedliche und für den Nutzungszweck erforderliche Formen aufweisen. Gegenüber einem einheitlich großen Gehäuse sind die drei Gehäuseteile zusammengesetzt leichter, kompakter und benötigen weniger Material zur Herstellung des Gehäuses als ein einheitlich großes Gehäuse eines elektromechanischen Bremsaktuators. Darüber hinaus ist der Führungskanal in dem dritten Gehäuseteil in seiner Dimensionierung so ausgebildet, dass der Stößel gleitend in dem Führungskanal gelagert und geführt ist.

Gemäß einer weiteren Ausbildung weist das erste Gehäuseteil mittig, bezogen auf eine axiale Achse des ersten Gehäuseteils, eine Öffnung zur Aufnahme und Betätigung des Stößels auf. Über die Öffnung kann der Stößel des elektromechanischen Bremsaktuators die Scheibenbremse mittels eines Drehhebels der Scheibenbremse zu spannen.

Beschreibung Seite 6 (Reinschrift) Vorteilhaft entspricht in einer weiteren Ausführung ein innerer Durchmesser der Öffnung einem inneren Durchmesser des Führungskanals. Die Öffnung ist demnach als Teil des Führungskanals anzusehen. Eine kleiner als der Stößel ausgebildete Öffnung würde während der Betätigung des elektromechanischen Bremsaktuators zu einem Verklemmen des Stößels führen. Eine zu große Öffnung, also eine Öffnung die im Durchmesser größer ist als der Führungskanal, führt dazu, dass der Stößel axial in Richtung des Drehhebels der Scheibenbremse nicht richtig geführt ist und es zu einem Verklemmen oder sogar zu einem Herausfallen des Stößels aus dem Führungskanal kommen kann.

In einer weiteren Ausbildung weist das erste Gehäuseteil axial an dem ersten äußeren Randbereich des ersten Gehäuseteils Bohrungen zur Anbindung an eine Scheibenbremse auf. Der erste Gehäuseteil entspricht in seiner Größe und in seiner Form einer Öffnung zur Aktuierung der Scheibenbremse. Bevorzugt mittels vier Bohrungen in dem ersten Gehäuseteil, in denen Schrauben oder Nieten eingebracht werden, wird der elektromechanische Bremsaktuator an die Scheibenbremse formschlüssig und kraftschlüssig fixiert. Zusätzlich weist das erste Gehäuseteil radial zwischen den Bohrungen Streben auf, die als Verstärkungsrippen ausgebildet sind.

In einer letzten Ausführung weist das erste Gehäuseteil axial, entgegengesetzt der Richtung des dritten Gehäuseteils, eine Nut zur Aufnahme einer Dichtung auf. Konkret ist die Nut in dem ersten Gehäuseteil an der Flanschseite zur Anbindung an die Scheibenbremse eingelassen. In die Nut ist eine Dichtung eingelassen, die die Verbindung zwischen der Scheibenbremse und dem Gehäuse mit dem ersten Gehäuseteil gegen Einwirkungen aus der Umwelt abdichtet. Die Nut ist unterbrechungsfrei entlang der Flanschseite des ersten Gehäuseteils eingebracht. Die Bohrungen des ersten Gehäuseteils befinden sich außerhalb der abzudichtenden Fläche der Flanschseite des ersten Gehäuseteils.

Nachfolgend werden ausgewählte Ausführungsbeispiele der Erfindung anhand der beigefügten Figuren erläutert.

Es zeigt:
Fig. 1 einen elektromechanischen Bremsaktuator aus einer seitlich gedrehten Ansicht ohne Motor und Kurvenscheibe,
Fig. 2 eine geschnittene Ansicht eines elektromechanischen Bremsaktuators,
Fig. 3 eine seitlich geschnittene Ansicht eines elektromechanischen Bremsaktuators,
Fig. 4 eine Vorderansicht eins elektromechanischen Bremsaktuators ausgehend von einem ersten Gehäuseteil,
Fig. 5 eine Draufsicht auf einen elektromechanischen Bremsaktuators, ausgehend von dem zweiten Gehäuseteil,
Fig. 6 einen elektromechanischen Bremsaktuator in einer alternativen Ausführungsform aus einer seitlich gedrehten Ansicht ohne Motor und Kurvenscheibe.

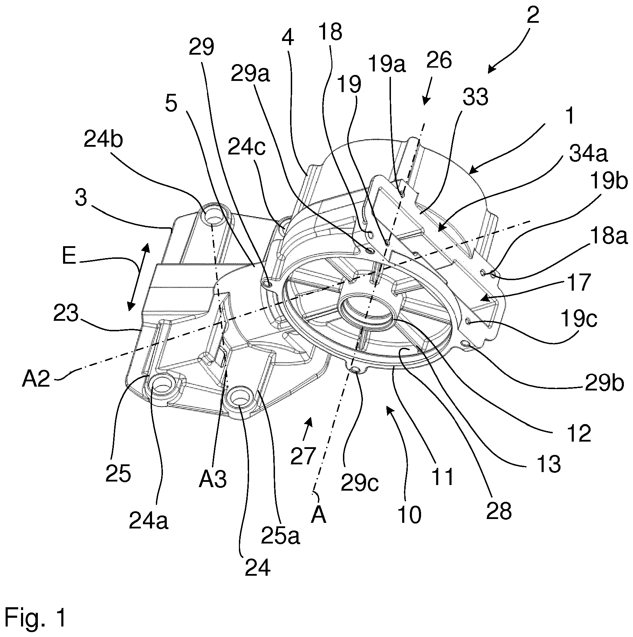

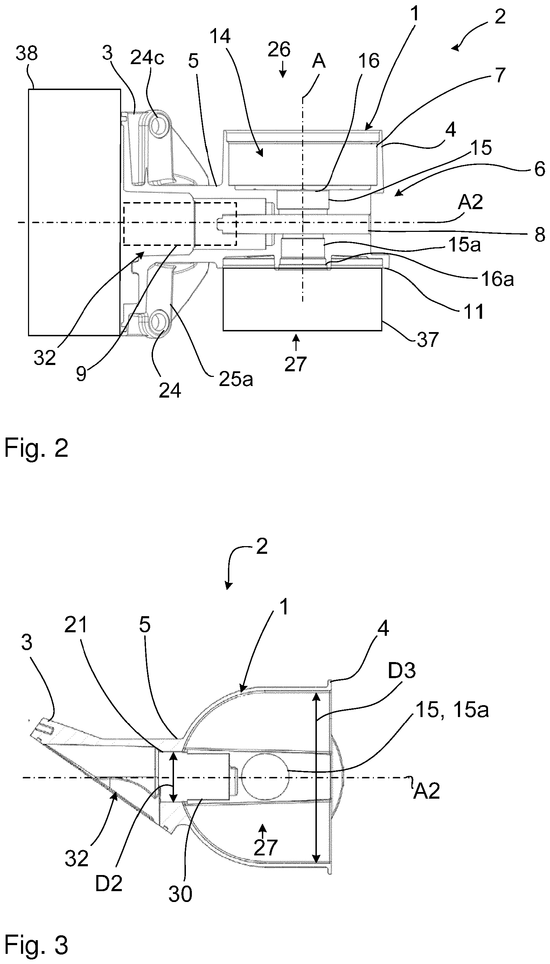

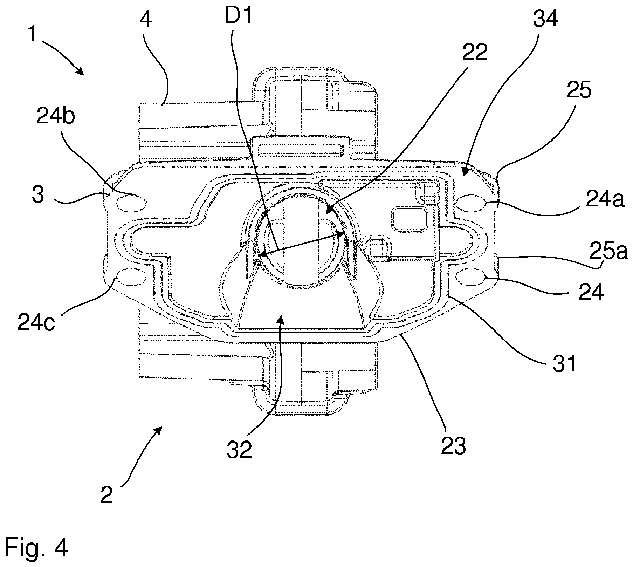

Fig. 1 zeigt einen elektromechanischen Bremsaktuator 2 mit einen in Fig. 2 gezeigten Motor 37 und einer Kurvenscheibe 8 (s. Fig.2). Der elektromechanische Bremsaktuator 2 ist von einer Außenseite 10 eines Gehäuses 1 gezeigt. Das Gehäuse 1 setzt sich aus drei Gehäuseteilen zusammen. Ein erstes Gehäuseteil 3 ist plattenförmig als Flansch zur Anbindung an eine in Fig. 2 gezeigte Scheibenbremse 38 ausgebildet. Das erste Gehäuseteil 3 weist, ausgehend von einer axialen Achse A3 des ersten Gehäuseteils 3, vier axiale Bohrungen 24, 24a, 24b, 24c auf. Die Bohrungen 24, 24a, 24b, 24c sind an einem äußeren Randbereich 23 des ersten Gehäuseteils 3 angeordnet und dienen der Fixierung an eine in Fig. 2 gezeigte Scheibenbremse 38 mittels nicht gezeigter Schrauben. Zwischen den sich gegenüberliegenden Bohrungen 24, 24c und den sich gegenüberliegenden Bohrungen 24a, 24b sind Versteifungsrippen 25, 25a angeordnet. Mittig am ersten Gehäuseteil 3 ist ein drittes Gehäuseteil 5 angeordnet. Das dritte Gehäuseteil 5 ist als Zylinder geformt und verbindet das erste Gehäuseteil 3 mit einem zweiten Gehäuseteil 4. Ausgehend von einer Bezugebene E des ersten Gehäuseteils 3, steht das dritte Gehäuseteil 5 entlang einer axialen Achse A2 des dritten Gehäuseteils 5 schräg von der Bezugebene E ab. Ausgehend von einer axialen Achse A des zweiten Gehäuseteils 4 ist das zweite Gehäuseteil 4 zylinderförmig ausgebildet, wobei das zweite Gehäuseteil 4 einen antriebsseitigen Bereich 26 und einen motorflanschseitigen Bereich 27 aufweist. Der motorflanschseitige Bereich 27 des zweiten Gehäuseteils 4 weist einen Motorflansch 11 zum Anbinden eines Motors 37 (s. Fig. 2) auf. Das Drehmoment des Motors 37 wird als Reaktionsmoment über den Motorflansch 11 abgestützt. Zentral und axial im Motorflansch 11 ist eine Lagerstelle 12 zur Abstützung der resultierenden Axialkräfte und/oder Betätigungskräfte eines Stößels 9 auf eine in dem zweiten Bremsgehäuseteil 4 angeordnete Kurvenscheibe 8 angeordnet. (s. Fig. 2), Von der Lagerstelle 12 ausgehend und radial verlaufend in Richtung eines umlaufenden Randbereichs 28 des Motorflansches 11, sind Verstärkungsrippen 13 angeordnet. Zur Anbindung des Motors 37 an den Motorflansch 11, weist der umlaufende Randbereich 28 des Motorflansches 11 vier Bohrungen 29, 29a, 29b, 29c) auf. Zwischen dem Motorflansch 11 und dem antriebsseitigen Bereich 26 elektromechanischen Bremsaktuators 2 des zweiten Gehäuseteils 4 ist radial eine Montageöffnung 17 angeordnet. Die Montageöffnung 17 weist einen Flanschbereich 33 zur Anordnung eines nicht gezeigten Deckels auf. Zusätzlich weist der Flanschbereich 33 eine zweite ebene Anlagefläche 34a auf, an der sich während des Umformprozesses des Gehäuses 1 eine Platte einer Zwei-Platten-Druckgießmaschine abstützt. Eine erste ebene Anlagefläche 34 ist in Fig. 4 gezeigt. Die Platte und die Zwei-Platten-Druckgießmaschine sind nicht gezeigt. Über Bohrungen 19, 19a, 19b, 19c der Montageöffnung 17 ist der nicht gezeigte Deckel mittels Schrauben kraftschlüssig und formschlüssig verbunden. Zwei sich schräg gegenüberliegende Ausnehmungen 18, 18a am Flanschbereich 33 der Montageöffnung 17 vereinfachen eine Bearbeitung des Gehäuses 1 während der Herstellung.

Fig. 2 zeigt eine Teilansicht des in Fig. 1 gezeigten elektromechanischen Bremsaktuator 2. Zusätzlich zeigt Fig. 2 eine Innenseite 14 des Gehäuses 1 mit einem Antrieb 6. Gut zu sehen ist in dem zweiten Gehäuseteil 4, in dem antriebsseitigen Bereich 26 , ein Getriebe 7 zur Anpassung der Drehzahlen des Motors 37 auf die Kurvenscheibe 8. Zwei Lageraufnahmen 15, 15a des zweiten Gehäuseteils 4 weisen zwei als Nadellager ausgebildete Lager 16, 16a auf. Die Nadellager 16, 16a lagern die Kurvenscheibe 8. Besonders gut zu sehen ist, dass das zweiten Gehäuseteil 4 entsprechend den innenliegenden Komponenten, wie der Kurvenscheibe 8 oder dem Getriebe 7 angepasst ist, sodass das Gehäuse 1, deren Bestandteil das zweite Gehäuseteil 4 ist, möglichst klein baut. Darüber hinaus ist Fig. 2 zu entnehmen, dass das erste Gehäuseteil 3, das zweite Gehäuseteil 4 und das dritte Gehäuseteil 5 ohne weitere Fixierungselemente als ein Gehäuse 1 ausgebildet ist. Weiterhin weist das erste Gehäuseteil 3 eine Aussparung 32 auf. Die Aussparung 32 ist dafür ausgelegt einen nicht gezeigten Drehhebel der Scheibenbremse 38 (s. Fig. 2) teilweise aufzunehmen, wobei der nicht gezeigte Drehhebel zur Aktuierung der Scheibenbremse 38 (s. Fig. 2) mit dem Stößel 9 in Verbindung steht.

Fig. 3 zeigt den elektromechanischen Bremsaktuator 2 ohne Kurvenscheibe 8 (s. Fig. 2) und die für die Lagerung der Kurvenscheibe 8 (s. Fig. 2) vorgesehenen Lager 16, 16a. Das heißt, die zentral im zweiten Gehäuseteil 4 angeordneten Lageraufnahmen 15, 15a sind gut sichtbar. Ein größter radialer Durchmesser D3 des zweiten Gehäuseteils 4 beträgt 72,5 mm. Im dritten Gehäuseteil 5 ist eine Stößelaufnahme 30 zur Positionierung des Stößels 9 ausgeformt, wobei die Stößelaufnahme 30, ausgehend von der axialen Achse A2 des dritten Gehäuseteils 5, von dem dritten Gehäusteil 5 in das zweite Gehäuseteil 4 übergeht. Die Stößelaufnahme 30 geht in dem dritten Gehäuseteil 5 in einem Führungskanal 21 zum Führen und Positionierung des Stößels 9 über. Der Führungskanal 21weist einen inneren Durchmesser D2 von 42 mm auf.

Fig. 4 zeigt noch einmal den elektromechanischen Bremsaktuator 2 nach den Figuren 1 bis 3 in einer Frontalansicht, ausgehend von dem ersten Gehäuseteil 3. Das erste Gehäuseteil 3 ist von der Flanschseite zur Anbindung der Scheibenbremse 38 (s. Fig. 2) gezeigt. Die erste ebene Anlagefläche 34 dient während des Umformprozesses des Gehäuses 1 dem Abstützen einer Platte einer Zwei-Platten-Druckgießmaschine. Zusätzlich erkennbar ist eine Öffnung 22 des ersten Gehäuseteils 3 zur Aufnahme und Aktuierung des Stößels 9. Ein innerer Durchmesser D1 der Öffnung 22 entspricht dem inneren Durchmesser D2 des Führungskanals 21 für den Stößel 9. Zur Abdichtung der Öffnung 22 gegen ein Eindringen von Verschmutzungen, weist das erste Gehäuseteil 3 flanschseitig eine umlaufende Nut 31 zur Aufnahme einer nicht gezeigten Dichtung auf. Die Nut 31 ist abschnittsweise an dem äußeren Randbereich 23 des ersten Gehäuseteils 3 eingebracht, schließt aber die Bohrungen 24, 24a, 24b, 24c zur Fixierung des elektromechanischen Bremsaktuators 2 an die Scheibenbremse 38 (s. Fig. 2) aus. Des Weiteren ist in Fig. 4 gezeigt, dass die Aussparung 32 zur teilweisen Aufnahme eines nicht gezeigten Drehhebels, von der Öffnung 22, trichterförmig radial in Richtung des äußeren Randbereichs 23 des ersten Gehäuseteils 3 verläuft.

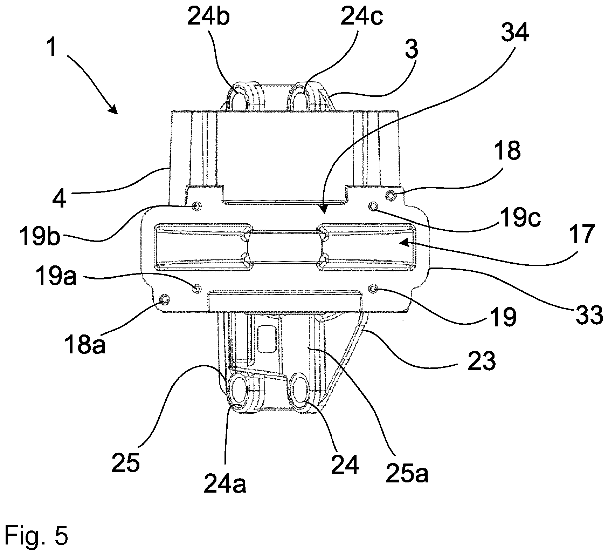

In Fig.5 ist noch einmal die Montageöffnung 17 des zweiten Gehäuseteils 4 des in Fig. 1 bis 4 gezeigten elektromechanischen Bremsaktuators 2 im Detail gezeigt.

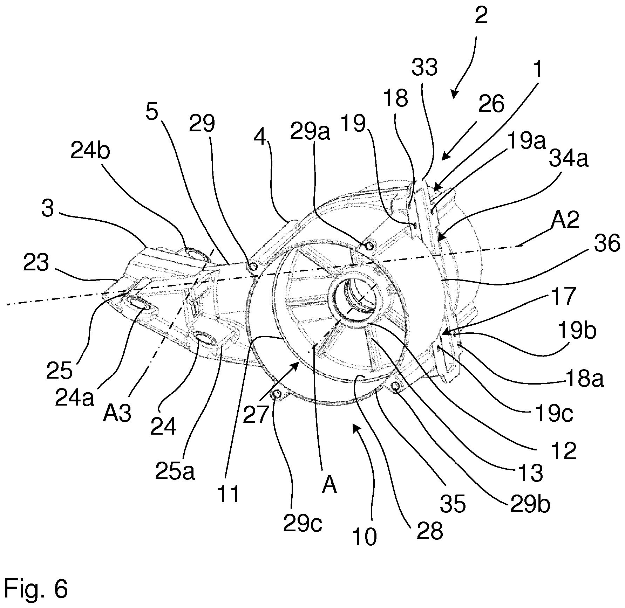

Fig. 6 zeigt eine alternative Ausführungsform des elektromechanischen Bremsaktuators 2. Die alternative Ausführungsform ist bis auf die Anbindung des Motors 37 (s. Fig. 2) mit dem elektromechanischen Bremsaktuator 2 nach den Figuren 1 bis 5 bauteilgleich. Der Motor 37 ist am motorflanschseitigen Bereich 27 des elektromechanischen Bremsaktuators 2, in Richtung der axialen Achse A des zweiten Gehäuseteils 4, direkt im zweiten Gehäuseteil 4 angeordnet. Ein zylindrischer Teilbereich 36 des zweiten Gehäuseteils 4 ist zur Aufnahme des Motors 37, in Richtung des motorflanschseitigen Bereichs 27 des elektromechanischen Bremsaktuators 2, axial verlängert. Die Bohrungen 29, 29a, 29b, 29c des zweiten Gehäuseteils 4 dienen der Aufnahme und Fixierung eines nicht gezeigten Deckels zum Verschließen des zweiten Gehäuseteils 4.

### Bezugszeichenliste als Teil der Beschreibung

- 1: Gehäuse
- 2: Elektromechanischer Bremsaktuator
- 3: erstes Gehäuseteil
- 4: zweites Gehäuseteil
- 5: drittes Gehäuseteil
- 6: Antrieb
- 7: Getriebe des Antriebs 6
- 8: Kurvenscheibe des Antriebs 6
- 9: Stößel
- 10: Außenseite des Gehäuses 1
- 11: Motorflansch
- 12: Lagerstelle
- 13: Verstärkungsrippen
- 14: Innenseite des Gehäuses 1
- 15, 15a: Lageraufnahmen
- 16, 16a: Lager
- 17: Montageöffnung
- 18, 18a: Ausnehmungen der Montageöffnung 17
- 19 bis 19c: Bohrungen der Montageöffnung 17
- 21: Führungskanal
- 22: Öffnung des ersten Gehäuseteils 3
- 23: äußerer Randbereich des ersten Gehäuseteils 3
- 24 bis 24c: Bohrungen des ersten Gehäuseteils 3
- 25, 25a: Versteifungsrippen
- 26: antriebsseitiger Bereich des zweiten Gehäuseteils 4 des elektromechanischen Bremsaktuators 2
- 27: motorflanschseitiger Bereich des Elektromechanischen Bremsaktuators 2
- 28: umlaufender Randbereich des Motorflansches 11
- 29 bis 29c: Bohrungen des zweiten Gehäuseteils 4
- 30: Stößelaufnahme
- 31: Nut des ersten Gehäuseteils 3
- 32: Aussparung
- 33: Flanschbereich der Montageöffnung 17
- 34: erste ebene Anlagefläche
- 34a: zweite ebene Anlagefläche
- 36: zylindrischer Teilbereich des zweiten Gehäuseteils 4
- 37: Motor
- 38: Scheibenbremse
- A: axiale Achse des zweiten Gehäuseteils 4
- A2: axiale Achse des dritten Gehäuseteils 5
- A3: axiale Achse des ersten Gehäuseteils 3
- D1: innerer Durchmesser der Öffnung 22 des ersten Gehäuseteils 3
- D2: innerer Durchmesser des Führungskanals 21
- D3: größter radialer Durchmesser des zweiten Gehäuseteils 4
- E: Bezugebene

## Patentansprüche

1. Elektromechanischer Bremsaktuator (2) mit einem Gehäuse (1) aufweisend, ein als Gehäuseflansch ausgebildetes erstes Gehäuseteil (3) zur Anbindung des elektromechanischen Bremsaktuators (2) an eine Scheibenbremse (38), ein zweites Gehäuseteil (4) zur Aufnahme eines Antriebs (6), und ein zwischen dem ersten Gehäuseteil (3) und dem zweiten Gehäuseteil (4) angeordnetes und mit dem ersten Gehäuseteil (3) und dem zweiten Gehäuseteil (4) verbundenes drittes, Gehäuseteil (5), und wobei der elektromechanische Bremsaktuator (2) Mittel, umfassend einen Motor (37), ein Getriebe (7), einen Stößel (9) oder eine Spindel, zum Aktuieren einer Scheibenbremse (38) aufweist, wobei das Gehäuse (1) ein Aluminium-Druckgussformteil ist und das dritte Gehäuseteil (5) zylinderförmig ausgebildet ist,
wobei der elektromechanische Bremsaktuator (2) **dadurch gekennzeichnet ist, dass** das dritte Gehäuseteil (5) axial entlang einer axialen Achse (A2) des dritten Gehäuseteils (5) einen Führungskanal (21) zum Führen des Stößels (9) aufweist.

2. Elektromechanischer Bremsaktuator (2) nach Anspruch 1, wobei das erste Gehäuseteil (3) eine ebene erste Anlagefläche (34) aufweist und das zweite Gehäuseteil (4) eine ebene zweite Anlagefläche (34a) aufweist, wobei die ebenen Anlageflächen (34, 34a) dazu ausgebildet sind, während des Umformprozesses des Gehäuses (1) Platten einer Zwei-Platten-Druckgießmaschine aufzunehmen.

3. Elektromechanischer Bremsaktuator (2) nach Anspruch 1 oder 2, wobei an einer Außenseite (10) des Gehäuses (1) das zweite Gehäuseteil (4), einen Motorflansch (11) zur Anbindung des Motors (37) aufweist oder dass das das zweite Gehäuseteil (4) einen zylindrischen Teilbereich (36) zur Aufnahme eines Motors (37) und einen Motorflansch (11) zur Anbindung eines Motors (37) aufweist.

4. Elektromechanischer Bremsaktuator (2) nach Anspruch 3, wobei der Motorflansch (11), ausgehend von einer axialen Achse (A) des zweiten Gehäuseteils (4), mittig eine Lagerstelle (12) aufweist und der Motorflansch (11), ausgehend von der Lagerstelle (12), in Richtung der Außenseite (10) des Gehäuses, (1) radial verlaufende Verstärkungsrippen (13) aufweist.

5. Elektromechanischer Bremsaktuator (2) nach Anspruch 3, wobei das zweite Gehäuseteil (4) an einer Innenseite (14) des Gehäuses (1), axial zwischen dem Motorflansch (11) und dem Getriebe (7) Lageraufnahmen (15, 15a) zur Anordnung von Lagern (16, 16a) aufweist, wobei die Lager (16, 16a) dafür eingerichtet sind, eine Kurvenscheibe (8) aufzunehmen.

6. Elektromechanischer Bremsaktuator (2) nach Anspruch 5, wobei das zweite Gehäuseteil (4) radial, entgegengesetzt der Richtung des ersten Gehäuseteils (3), zwischen dem Motorflansch (11) und dem Getriebe (7), eine Montageöffnung (17) für die Kurvenscheibe (8) aufweist.

7. Elektromechanischer Bremsaktuator (2) nach Anspruch 6, wobei die Montageöffnung (17) Ausnehmungen (18, 18a) zur Aufnahme eines Bearbeitungswerkzeugs aufweist und das die Montageöffnung (17) Bohrungen (19, 19a, 19b, 19c) zur Aufnahme eines Deckels aufweist.

8. Elektromechanischer Bremsaktuator (2) nach Anspruch nach einem der vorangegangenen Ansprüche, wobei das erste Gehäuseteil (3) mittig, bezogen auf eine axiale Achse (A3) des ersten Gehäuseteils (3), eine Öffnung (22) zur Aufnahme und Betätigung des Stößels (9) aufweist.

9. Elektromechanischer Bremsaktuator (2) nach Anspruch 8, wobei ein innerer Durchmesser (D1) der Öffnung (22) einem inneren Durchmesser (D2) des Führungskanals (21) entspricht.

10. Elektromechanischer Bremsaktuator (2) nach einem der vorangegangenen Ansprüche, wobei das erste Gehäuseteil (3) axial an dem äußeren Randbereich (23) des ersten Gehäuseteils (3) Bohrungen (24, 24a, 24b, 24c) zur Anbindung an die Scheibenbremse (38) aufweist.

11. Elektromechanischer Bremsaktuator (2) nach einem der vorangegangenen Ansprüche, wobei das erste Gehäuseteil (3) axial, entgegengesetzt der Richtung des dritten Gehäuseteils (5) eine Nut (31) zur Aufnahme einer Dichtung aufweist.

## Claims

1. Electromechanical brake actuator (2) with a housing (1), having a first housing part (3) configured as a housing flange for attachment of the electromechanical brake actuator (2) to a disc brake (38), a second housing part (4) for receiving a drive (6), and a third housing part (5) arranged between the first housing part (3) and the second housing part (4) and connected to the first housing part (3) and the second housing part (4), the electromechanical brake actuator (2) having means, comprising a motor (37), a gearbox (7), a tappet (9), or a spindle, for actuating a disc brake (38), wherein the housing (1) is an aluminium die-cast formed part, and the third housing part (5) is cylindrical in design, wherein the electromechanical brake actuator (2) is **characterized in that** the third housing part (5) has a guide channel (21) for guiding the tappet (9) axially along an axial axis (A2) of the third housing (5).

2. Electromechanical brake actuator (2) according to Claim 1, wherein the first housing part (3) has a first planar contact surface (34) and the second housing part (4) has a second planar contact surface (34a), wherein the planar contact surfaces (34, 34a) are configured to receive plates of a two-plate die-casting machine during the forming process of the housing (1).

3. Electromechanical brake actuator (2) according to Claim 1 or 2, wherein the second housing part (4) has a motor flange (11) for attaching the motor (37) on an outer side (10) of the housing (1) or wherein the second housing part (4) has a cylindrical partial region (36) for receiving a motor (37) and a motor flange (11) for attaching a motor (37).

4. Electromechanical brake actuator (2) according to Claim 3, wherein the motor flange (11) has a central bearing point (12) starting from an axial axis (A) of the second housing part (4), and the motor flange (11) has reinforcement ribs (13) running radially in the direction of the outer side (10) of the housing (1) starting from the bearing point (12).

5. Electromechanical brake actuator (2) according to Claim 3, wherein the second housing part (4) has on an inner side (14) of the housing (1) bearing receiving means (15, 15a) for the arrangement of bearings (16, 16a) axially between the motor flange (11) and the gearbox (7), wherein the bearings (16, 16a) are set up to receive a cam disc (8).

6. Electromechanical brake actuator (2) according to Claim 5, wherein the second housing part (4) has an assembly opening (17) for the cam disc (8) radially opposite the direction of the first housing part (3) between the motor flange (11) and the gearbox (7).

7. Electromechanical brake actuator (2) according to Claim 6, wherein the assembly opening (17) has recesses (18, 18a) for receiving a machining tool and wherein the assembly opening (17) has bores (19, 19a, 19b, 19c) for receiving a cover.

8. Electromechanical brake actuator (2) according to one of the preceding claims, wherein the first housing part (3) has an opening (22) for receiving and actuating the tappet (9) which is central in relation to an axial axis (A3) of the first housing part (3).

9. Electromechanical brake actuator (2) according to Claim 8, wherein an inner diameter (D1) of the opening (22) corresponds to an inner diameter (D2) of the guide channel (21).

10. Electromechanical brake actuator (2) according to one of the preceding claims, wherein the first housing part (3) has bores (24, 24a, 24b, 24c) for attachment to the disc brake (38) axially on the outer peripheral region (23) of the first housing part (3).

11. Electromechanical brake actuator (2) according to one of the preceding claims, wherein the first housing part (3) has a groove (31) for receiving a seal axially, opposing the direction of the third housing part (5).

## Revendications

1. Actionneur électromécanique de frein (2) doté d'un boîtier (1) présentant une première partie le boîtier (3), réalisée sous forme de bride de boîtier, servant à la connexion de l'actionneur électromécanique de frein (2) à un frein à disque (38), une deuxième partie de boîtier (4) servant au logement d'un entraînement (6), et une troisième partie de boîtier (5) agencée entre la première partie le boîtier (3) et la deuxième partie de boîtier (4) et reliée à la première partie de boîtier (3) et à la deuxième partie de boîtier (4), et l'actionneur électromécanique de frein (2) présentant des moyens, comprenant un moteur (37), une transmission (7), un poussoir (9) ou une broche, servant à l'actionnement d'un frein à disque (38), le boîtier (1) étant une pièce moulée sous pression en aluminium et la troisième partie de boîtier (5) étant réalisée sous forme cylindrique, l'actionneur électromécanique de frein (2) étant **caractérisé en ce que** la troisième partie de boîtier (5) présente, axialement le long d'un axe axial (A2) de la troisième partie de boîtier (5), un canal de guidage (21) servant au guidage du poussoir (9).

2. Actionneur électromécanique de frein (2) selon la revendication 1, dans lequel la première partie de boîtier (3) présente une première surface d'appui plane (34) et la deuxième partie de boîtier (4) présente une deuxième surface d'appui plane (34a), les surfaces d'appui planes (34, 34a) étant réalisées pour loger des plateaux d'une machine de moulage sous pression à deux plateaux pendant un processus de formage du boîtier (1).

3. Actionneur électromécanique de frein (2) selon la revendication 1 ou 2, dans lequel, sur un côté extérieur (10) du boîtier (1), la deuxième partie de boîtier (4) présente une bride de moteur (11) servant à la connexion du moteur (37) ou la deuxième partie de boîtier (4) présente une région partielle cylindrique (36) servant au logement d'un moteur (37) et une bride de moteur (11) servant à la connexion d'un moteur (37).

4. Actionneur électromécanique de frein (2) selon la revendication 3, dans lequel la bride de moteur (11) présente centralement, à partir d'un axe axial (A) de la deuxième partie de boîtier (4), un point de palier (12) et la bride de moteur (11) présente, à partir du point de palier (12), des nervures de renforcement (13) s'étendant radialement en direction du côté extérieur (10) du boîtier (1).

5. Actionneur électromécanique de frein (2) selon la revendication 3, dans lequel la deuxième partie de boîtier (4) présente, sur un côté intérieur (14) du boîtier (1), axialement entre la bride de moteur (11) et la transmission (7), des logements de palier (15, 15a) servant à l'agencement de paliers (16, 16a), les paliers (16, 16a) étant conçus pour loger un disque à came (8).

6. Actionneur électromécanique de frein (2) selon la revendication 5, dans lequel la deuxième partie de boîtier (4) présente une ouverture de montage (17) pour le disque à came (8) radialement, à l'opposé de la première partie de boîtier (3), entre la bride de moteur (11) et la transmission (7).

7. Actionneur électromécanique de frein (2) selon la revendication 6, dans lequel l'ouverture de montage (17) présente des évidements (18, 18a) servant au logement d'un outil d'usinage et l'ouverture de montage (17) présente des alésages (19, 19a, 19b, 19c) servant à la réception d'un couvercle.

8. Actionneur électromécanique de frein (2) selon l'une des revendications précédentes, dans lequel la première partie de boîtier (3) présente centralement, par rapport à un axe axial (A3) de la première partie de boîtier (3), une ouverture (22) servant au logement et à l'actionnement du poussoir (9).

9. Actionneur électromécanique de frein (2) selon la revendication 8, dans lequel un diamètre intérieur (D1) de l'ouverture (22) correspond à un diamètre intérieur (D2) du canal de guidage (21).

10. Actionneur électromécanique de frein (2) selon l'une des revendications précédentes, dans lequel la première partie de boîtier (3) présente, axialement au niveau de la région de bord extérieure (23) de la première partie de boîtier (3), des alésages (24, 24a, 24b, 24c) servant à la connexion au frein à disque (38).

11. Actionneur électromécanique de frein (2) selon l'une des revendications précédentes, dans lequel la première partie de boîtier (3) présente axialement, à l'opposé de la troisième partie de boîtier (5), une rainure (31) servant au logement d'un joint d'étanchéité.
